# EUROPEAN PATENT APPLICATION

(11) **EP 4 464 539 A1**
(43) Date of publication of application: **20.11.2024**
(21) Application number: 24175193.2
(22) Date of filing: 10.05.2024
(51) Int. Cl.: B60L 53/00

(54) **MOTOR VEHICLE WITH RELEASABLE ELECTRIC CHARGING PORT**

(30) Priority: 18.05.2023 IT 202300010077
(71) Applicant: FERRARI S.p.A., 41100 Modena (IT)
(72) Inventor: ALOISI, Andrea, 41100 MODENA (IT)
(74) Representative: Studio Torta S.p.A.

(57) **Abstract**

A motor vehicle (1) electrically connectable to an external electric charging source (8) includes a body (2) defining a passenger compartment (3) to accommodate a user, an electrical charging assembly (5) comprising a base portion (11) carried by the body (2) in a fixed position and a charging port (6) configured to receive in coupling an electrical connector (7) of the external electric charging source (8), releasable coupling means (13) configured to attach the charging port (6) to the base portion (11) in a releasable manner, release means (24) operable to control the releasable coupling means (13) so as to release the charging port (6) with respect to the base portion (11), and a release controller (30) operable by the user to operate the release means (24) to release the charging port (6) with respect to the base portion (11), characterised in that the release controller (30) is usable by the user from inside the passenger compartment (3) to operate the release means (24) .

## Description

### CROSS-REFERENCE TO RELATED APPLICATIONS

This patent application claims priority of Italian patent application no. 102023000010077 filed on May 18, 2023, the content of which is incorporated herein by reference.

### FIELD OF THE ART

The invention relates to a motor vehicle, in particular having an electric charging port to be electrically connected to an external electric charging source.

### PRIOR ART

Some motor vehicles comprise one or more electric charge storage devices, such as batteries, as well as one or more electric propulsion units powered by means of electric current from the electric charge storage devices.

In some cases, the electric charge storage device can be recharged by means of an external electric charging source since the motor vehicle includes an electric charging port electrically connected to the electric charge storage devices.

The external electric charging source, which could be, for example, a special charging station, can be connected to the electric charging port by means of a suitable cable.

Normally, the motor vehicle includes a sensor which detects when the charging port is connected to the external electric charging source and a control device which inhibits the delivery of torque to the wheels of the motor vehicle when the sensor detects that the charging port is connected to the external electric charging source.

Therefore, the motor vehicle cannot be moved by a driver when the electric charging port is connected to the external electric charging source, i.e., during a charging process of the electric charge storage devices by means of the electric charging port.

This is necessary to avoid damage to the electric charging port and the external electric charging source, as well as to avoid the obvious dangers associated with moving the motor vehicle while it is mechanically connected to the external electric charging source.

On the other hand, the motor vehicle is forced to remain stationary, thus becoming a potential target for malicious attackers.

Moreover, should the driver decide to stay inside the motor vehicle during the charging process, the driver's safety could be put at serious risk in view of the possible attacks which attackers could perpetrate against the motor vehicle.

The risks become even higher if the external electrical charging source, as is often the case, is located in sparsely crowded and generally unsupervised places.

Therefore, the need is felt to increase the security of the motor vehicle and its driver against potential attacks by malicious attackers.

An aim of the invention is to meet the above need, preferably in a simple and reliable manner.

### DISCLOSURE OF THE INVENTION

The aim is achieved by a motor vehicle according to claim 1.

The dependent claims define particular embodiments of the invention.

### BRIEF DESCRIPTION OF THE DRAWINGS

In the following, an embodiment of the invention is described for a better understanding thereof by way of non-limiting example and with reference to the accompanying drawings, in which:
- figure 1 is a perspective view of a motor vehicle according to the invention connected to an external electric charging source,
- figure 2 is a perspective view of the interior of a passenger compartment of the motor vehicle of figure 1,
- figures 3, 4 are schematic plan views illustrating respective steps for connecting an external electric charging source to an electric charging interface of the motor vehicle of figure 1,

- figure 5 is a schematic plan view illustrating a release of a portion of the electric charging interface with respect to the rest of the motor vehicle, and
- figure 6 is a section of a detail, in enlarged scale, of the electric charging interface with a mechanism to attach the released portion in figure 5 to a remaining portion of the electric charging interface in a releasable manner.

### EMBODIMENTS OF THE INVENTION

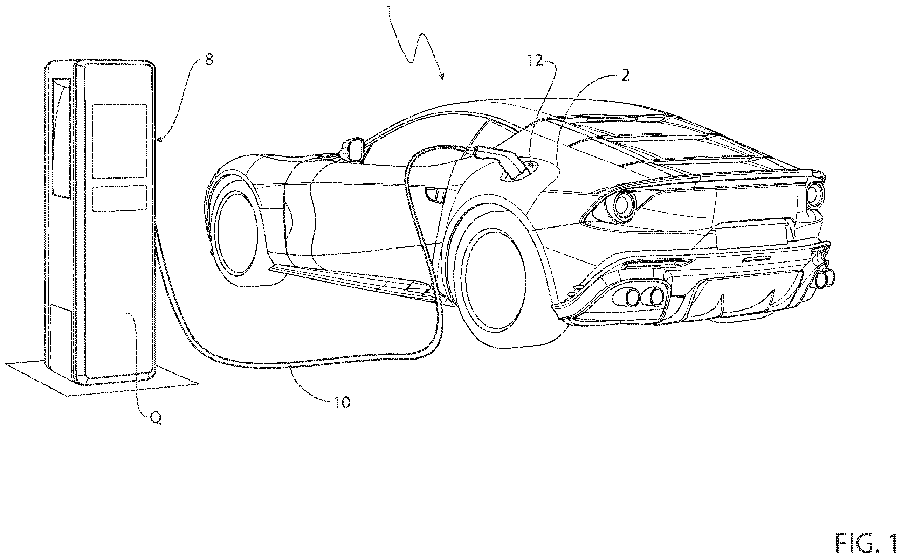

In figure 1, reference number 1 is used to denote a motor vehicle as a whole.

Like all motor vehicles, the motor vehicle 1 has a body 2, in turn comprising a chassis and a bodywork carried by the chassis and defining the external surfaces of the motor vehicle 1.

The body 2 defines a passenger compartment 3 of the motor vehicle 1, viz., the interior environment intended to accommodate one or more users of the motor vehicle 1, including a driver and one or more passengers.

The motor vehicle 1 is a hybrid electric or fully electric motor vehicle, viz., it has at least one electric powertrain and one electrical energy storage device (not shown) electrically connected to the electric powertrain and configured to deliver electric energy to power the electric powertrain.

The electrical energy storage device is rechargeable, viz., it is configured to store electrical energy when supplied with electric current.

For example, the electrical energy storage device comprises or is defined by one or more batteries; the electrical energy storage device could comprise, alternatively or additionally, a capacitive medium, such as a capacitor or super capacitor.

The motor vehicle 1 comprises an electrical charging assembly 5 in turn comprising a charging port 6 configured to receive in coupling an electrical connector 7 of an external electric charging source 8.

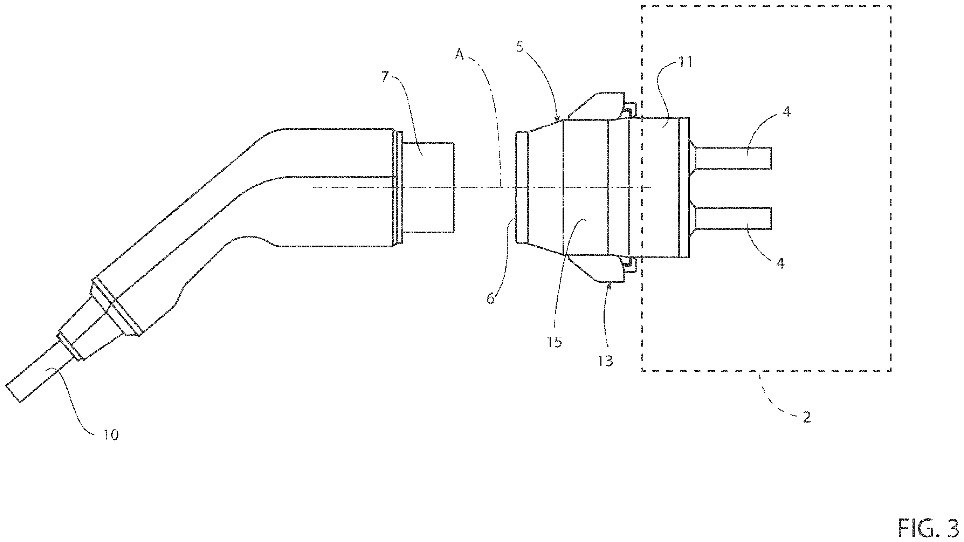

The charging port 6 is electrically connected to the electrical energy storage device. Figures 3-5 specifically show two connectors 4, in the particular form of feet, which are part of the charging assembly 5 and are useful for connecting the charging port 6 to the electrical energy storage device.

Thereby, the electrical energy storage device can be supplied with electric current from the source 8 by means of the charging port 6.

In fact, the source 8 is configured to deliver electrical energy in the form of an electric current. In more detail, in addition to connector 7, the source 8 comprises a charging column Q, for example of known type, and a cable 10 to electrically connect the charging column Q to the connector 7.

In particular, the charging port 6 has a female connector adapted to couple with the connector 7, which is a male connector.

In figure 3, the connector 7 is disconnected from the charging port 6, although the connector 7 is facing the charging port 6.

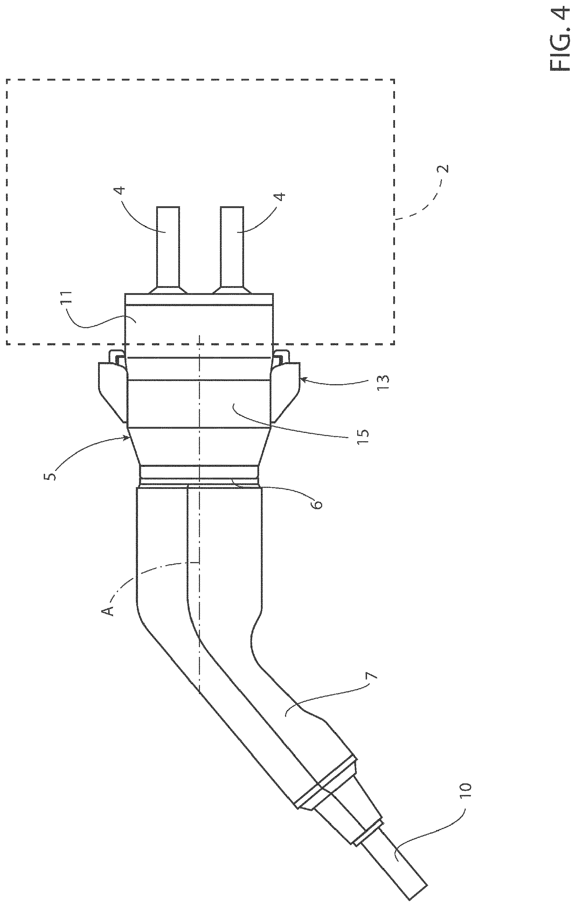

In figure 4, the connector 7 is connected to the charging port 6, as in figure 1.

The charging assembly 5 comprises, in addition to the charging port 6, a base portion 11 carried by the body 2 in a fixed position with respect to the body 2 itself.

The base portion 11 is arranged inside a charging compartment 12 of the motor vehicle 1; the charging compartment 12 is located on the body 2 and is accessible from the outside of the motor vehicle 1, in particular selectively, more in particular by means of the opening a door of a known type, not illustrated. The door is movable between a closing configuration, in which the door is flush with the body 2 and covers the charging compartment 12, and an opening configuration, in which the door uncovers the charging compartment 12, thus making the latter accessible from outside the motor vehicle 1.

The charging port 6 is attached in a releasable manner to the base portion 11 by means of a releasable coupling device 13, generally forming part of the motor vehicle 1.

Figures 3 and 4 show the charging port 6 attached to the base portion 11 by the releasable coupling device 13.

When attached to the base portion 11, the charging port 6 is electrically connected to the connectors 4, for example by electrical contact between conductive members of the charging port 6 and the connectors 4, respectively.

The conductive members are not necessarily attached to each other directly, but can also only come into reciprocal contact due to the attachment of the charging port 6 to the base portion 11 by means of the releasable coupling device 13.

The connectors 4 may, for example, cross the base portion 11 to come into electrical contact with the charging port 6.

In the specific example illustrated, the charging port 6 is arranged in a fixed position on a portion 15 of the charging assembly 5, where the portion 15 protrudes with respect to the base portion towards the outside of the motor vehicle 1 or the charging compartment 12.

In other words, here, the charging port 6 is arranged between the connector 7 and the base portion, in particular according to an alignment along a straight axis A.

Preferably, the portion 15 and the base portion 11 are housed inside the charging compartment 12.

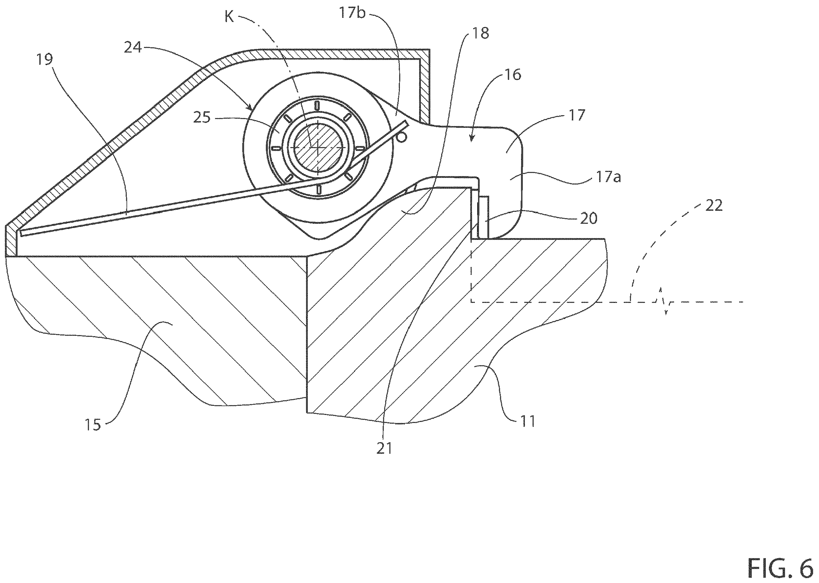

In detail, the releasable coupling device 13 comprises a mechanism 16 (figure 6) carried by the charging port 6 or by the portion 15. Alternatively, the mechanism 16 could have been carried by the base portion 11, instead of the portion 15, without losing generality.

In more detail, the mechanism 16 comprises a locking element 17, for example in the form of a hook, which can be controlled between an engagement configuration, in which it engages or connects with a locking element 18 of the base portion 11, and a release configuration, in which it disengages with the locking element 18. Alternatively, the locking element could have been part of the portion 15 or of the charging port 6, instead of the base portion 11, if the mechanism 16 had been carried by the base portion 11.

The charging port 6 or the portion 15 and the base portion 11 are mechanically coupled and released from each other when the mechanism 16 is in the engagement and in the release configuration, respectively.

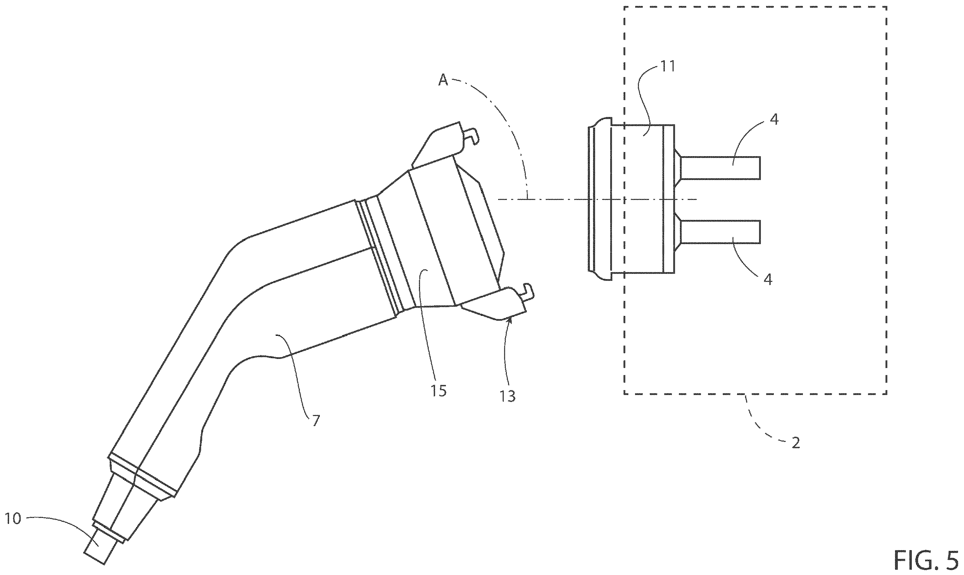

Figure 5 shows the charging port 6 and the base portion 11 released from each other. In figure 5, connector 7 is still attached to the charging port 6.

For example, in the engagement configuration, the locking elements 17, 18 can connect or engage with each other according to a form fit, for example by means of teeth, or also according to a friction-based coupling between the locking elements 17, 18, viz., according to a coupling based on reciprocal contact between the locking elements 17, 18.

What is stated with regard to the engagement and release configurations applies to at least one or only one specific relative positioning between the portion 15 or the charging port 6 and the base portion 11. The specific relative positioning therefore defines a relative positioning of mechanical cooperation of the charging port 6 and the base portion 11.

In other words, the mechanism 16 can be conducted in the engagement configuration at least when, or only when, either the portion 15 or the charging port 6 and the base portion 11 are arranged according to the specific positioning.

In the release configuration, the charging port 6 and the base portion 11 are detached from each other, viz., they can be freely separated or spaced apart.

In the embodiment illustrated in figure 6, the locking element 17 has a free end 17a configured to engage with the locking element 18 and an end 17b hinged to the portion 15 or to the charging port 16, whereby the locking element 17 is rotatable about a hinge axis K at the end 17b. In more detail, in the specific reciprocal positioning between the charging port 6 and the base portion 11, the locking element 17 is rotatable about the axis K between the engagement configuration and the release configuration.

Outside of the specific reciprocal positioning, the engagement configuration and the release configuration will correspond to two distinct generic configurations of the mechanism 16, referred to herein as the first and second configuration, respectively.

Preferably, the motor vehicle 1 comprises an elastic return device 19, for example a spring, configured to exert an elastic return, viz., an elastic reaction force or more simply an elastic reaction, on the mechanism 16 or more precisely on the locking element 17 towards the first configuration when the mechanism 16 is moved away from the first configuration.

In particular, the elastic return element 19 comprises a torsional spring arranged about the axis K and having two ends respectively attached to the locking element 17 and to the charging port 6 or to the portion 15 to elastically react with an opposite reaction in response to a torque about the axis K to bring the mechanism 16 into the second configuration.

Preferably, the coupling device 13 further comprises a pair of magnetic elements 20, 21 respectively carried by the charging port 6 or by the portion 15 and by the base portion 11.

The magnetic elements 20, 21 form as a whole a pair which can be power supplied with an electrical power such that they can magnetically cooperate with each other to magnetically attach the charging port 6 and the base portion 11 to each other.

Here, the expression 'as a whole' refers to the non-essentiality of the power supply of both magnetic elements 20, 21. In other words, the power supply must be sufficient to ensure the magnetic cooperation between the magnetic elements 20, 21 such that the charging port 6 and the base portion 11 can be attached together. Therefore, the power supply could only affect one of the magnetic elements 20, 21. In particular, the one which can effectively be supplied between the magnetic elements 20, 21 would define an electromagnet, while the other between the magnetic elements 20 could also only be configured to be attracted by the supplied electromagnet.

More specifically, the magnetic elements 20, 21 are respectively arranged so as to be able to cooperate with each other, when the pair is supplied with electric current, at least when or only when the charging port 6 and the base portion 11 are arranged according to a specific relative positioning, viz., according to a relative positioning of magnetic cooperation of the charging port 6 and the base portion 11, preferably coinciding with the relative positioning of mechanical cooperation.

Hereinafter, any reference to the pair formed by the magnetic elements 20, 21 is to be understood as the pair as a whole, in particular when the charging port 6 and the base portion 11 are arranged according to the relative positioning of magnetic cooperation, without the need for the magnetic elements 20, 21 to both be individually involved, but with reference to the fact that one of the magnetic elements 20, 21 is at least indirectly involved, as part of the pair, by means of the direct involvement of the other of the magnetic elements 20, 21.

The motor vehicle 1 further comprises a power line 22 configured to electrically power the pair formed by the magnetic elements 20, 21, viz., at least one of the magnetic elements 20, 21.

In particular, the power line 22 is configured to electrically connect the aforesaid electrical energy storage device with the pair formed by the magnetic elements 20, 21, viz., with said one of the magnetic elements.

The power line 22 is controllable to interrupt the power supply of the pair formed by the magnetic elements 20, 21, for example in that the power line 22 comprises a switch selectively controllable between two positions, in which it respectively connects and disconnects the pair formed by the magnetic elements 20, 21, viz., one or both of the magnetic elements 20, 21, from the electrical energy storage device, viz., from another alternative source of electric current.

Therefore, the magnetic elements 20, 21 (and thus the charging port 6 and the base portion 11) can be magnetically decoupled by interrupting the power supply.

Conveniently, the locking elements 17, 18 comprise the magnetic elements 20, 21 respectively.

In particular, the end 17a terminates with the magnetic element 20 to come into contact with the locking element 18 or more in particular with the magnetic element 21 of the latter.

Specifically, the magnetic elements 20, 21 are respectively in contact with each other when the mechanism 16 is in the engagement configuration, in particular in the relative positioning of mechanical cooperation.

Conveniently, the magnetic elements 20, 21 are, however, independent of the presence of the mechanism 16, viz., they can also be present without the mechanism 16 to carry out the function of attaching the charging port 6 and the base portion 11 magnetically, viz., by the properties of magnetism.

In addition, the motor vehicle 1 comprises a release apparatus 24 operable to control the coupling device 13 so as to release the charging port 6 or the portion 15 with respect to the base portion 11.

In other words, the release apparatus 24 has the function of releasing the charging port 6 or the portion 15 from the base portion 11, thus allowing in particular the reciprocal separation or ceasing the reciprocal cooperation thereof.

For example, the release apparatus 24 comprises an actuator device 25 configured to drive the mechanism 16, in particular in the release configuration from the engagement configuration, more in particular against the reaction of the elastic return device 19.

In particular, the actuator device 24 is configured to rotate the locking element 17 about the hinge axis K.

Alternatively or additionally, the release apparatus 24 can comprise the power line 22. In fact, the power line 22 can be controlled to interrupt the supply of the torque formed by the magnetic elements 20, 21, thus causing a magnetic decoupling between the magnetic elements and consequently between the charging port 6 and the base portion 11.

The magnetic decoupling serves to release the charging port 6 or the portion 15 with respect to the base portion 11.

In particular, the magnetic decoupling, where present, is implemented before the actuator device 25 is controlled to drive the mechanism 16 in the release configuration from the engagement configuration.

The motor vehicle 1 comprises a release controller 30 usable or operable by the user to operate the release apparatus 24.

Operating the release apparatus 24 corresponds to carrying out the function of the release apparatus 24 itself, viz., to release or control the release of the charging port 6 with respect to the base portion 11.

In more detail, the release apparatus 24 or more generally the motor vehicle 1 can comprise a control unit configured to control the release of the charging port 6 with respect to the base portion 11, for example by controlling the actuator device 25 and/or the power line 22, in response to the use of the release controller 30 or more precisely based on how the release controller 30 is used.

In particular, the control unit receives an input signal indicative of the use of the release controller 30, for example corresponding to a user request to release the charging port 6 with respect to the base portion 11.

Thus, the control unit emits one or more control signals in response to the reception of the input signal, where the control signals are configured to control the release apparatus 24 or its components, so that the latter achieve the release of the charging port 6 with respect to the base portion 11.

Specifically, the control signals first control the power line 22 to interrupt the power supply of the torque formed by the magnetic elements 20, 21, and then control the actuator device 25 so that the latter drives the mechanism 16 into the release configuration from the engagement configuration.

Thereby, the charging port 6 is released or free with respect to the base portion 11.

The release controller 30 could be manipulable by the user; in more detail, the release controller 30 could, for example, be movable from a rest position, in which the release controller 30 is substantially inoperative, to a release position, in which it controls the release of the charging port 6 by means of the release apparatus 24, viz., by controlling the release apparatus 24, in particular by means of the emission of the input signal.

Therefore, according to this specific non-limiting example, the user can manipulate the release controller 30 by moving the latter from the rest position to the release position, thus effectively requiring the release of the charging port 6 with respect to the base portion 11.

In this case, the release controller 30 would comprise a manipulable portion, which could itself be a lever, a button, a cloche, a knob, a keyboard, a mouse, and similar controls of known type, without losing generality. Furthermore, the release controller 30 would comprise an emitter excitable by means of the manipulable portion to emit the input signal. Therefore, the manipulable portion could be that which can be moved from the rest position to the release position.

According to a further example, the release controller 30 could be a purely computer-based controller, understood herein as a controller substantially usable without any movement of manipulable bodies by the user, viz., for example a touch-sensitive portion of a screen, or even a signal receiver, for example of the voice, optical or electromagnetic type.

Therefore, the purely computer-controlled controller would be a receiver device configured to receive an engagement signal, for example an electrical impulse due to contact with the user (touch-sensitive portion), a sound signal (voice command), or an electromagnetic signal from other input devices such as keyboards, mobile phones, radio controls, virtual keys, and the like.

The receiver device is also configured to operate the release apparatus 24 when it receives the engagement signal or more precisely to emit the aforesaid input signal.

The release controller 30 is usable from inside the passenger compartment 3.

More precisely, the release controller 30 is reachable by the user from inside the passenger compartment 3. In particular, the release controller 30 is reachable by the user at least selectively or directly.

The expression 'selectively' herein refers to the fact that the user could have to carry out one or more specific predetermined actions within the passenger compartment 3 in order to actually be able to reach or use the release controller 30, in particular in a direct or immediate manner.

Preferably, in fact, the motor vehicle 1 comprises an access device or access controller 31 operable by the user from within the passenger compartment 3 to enable access to the release controller 30.

Herein, access is understood as the possibility of use or reachability, in particular direct, of the release controller 30.

In other words, as long as the access device 31 is not used or operated to enable access to the release controller 30, the user cannot use or reach the release controller 30 itself, viz., the user is inhibited from (directly) using or reaching the release controller 30.

The access device 31 is preferably reachable by the user inside the passenger compartment 3.

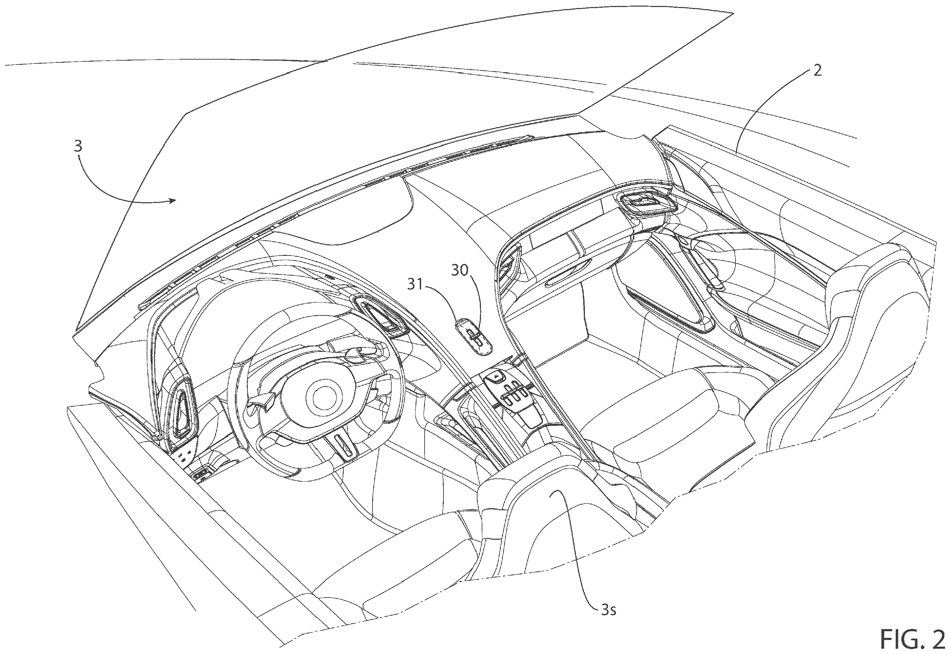

In the embodiment illustrated in figure 2, the access device 31 comprises a removable cover (for example by pressing lightly on the cover itself) arranged closing a compartment containing the manipulable portion of the release controller 30, defined herein in particular by a lever.

The compartment is preferably obtained on the dashboard of the motor vehicle 1 inside the passenger compartment 3.

According to another example, the access controller 31 is a (physical or virtual) button, the pressing of which controls the appearance of the release controller 30 as a touch-sensitive portion of a screen of the motor vehicle 1. Conversely, without pressing the button, the release controller 30 remains hidden and thus unreachable by the user.

The release controller 30 is preferably located, for example physically, inside the passenger compartment 3.

If the release controller 30 is a virtual control, the aforesaid input devices could also be arranged inside the passenger compartment 3 in a fixed position, although this is not essential.

Conveniently, the release controller 30 can be reached, in particular at least selectively or directly, by the user seated in a seat 3s of the motor vehicle 1.

The seat 3s is coupled to the body 2 and arranged inside the passenger compartment 3. The seat 3s can be configured for the driver or for one or more of the passengers.

From the above, the advantages of the motor vehicle 1 according to the invention are clear.

Thanks to the usability of the release controller 30 from inside the passenger compartment 3, the user can safely wait for the completion of charging the electrical energy storage device inside the passenger compartment 3.

In fact, in the case of attachments to the motor vehicle 1, the user need not fear the risks associated with leaving the passenger compartment 3 but can release the charging port 6 from the base portion 11 using the release controller 30.

Thereby, the motor vehicle 1 can start again as soon as it is released.

The only component of the motor vehicle 1 which would be left behind would therefore be the charging port 6, while the user can quickly escape with the rest of the motor vehicle 1.

Furthermore, the access device 31 helps to prevent inadvertent operation of the release apparatus 24, while not unduly hindering the voluntary release operations of the charging port 6 with respect to the base portion 11.

Finally, it is clear that modifications and variations can be made to the motor vehicle 1 according to the invention without, however, departing from the scope of protection defined by the claims.

In particular, the number and shape of the components described and illustrated could be different.

Furthermore, the various examples described can be combined with each other to determine further embodiments within the aforesaid scope of protection.

Finally, the mechanism 16 represents only one possible non-limiting embodiment. In addition, the mechanism 16 could be configured not only in a releasable manner but also to actively eject the charging port 6, for example by pushing it away from the base portion 11.

## Claims

1. Motor vehicle (1) electrically connectable to an external electric charging source (8), the motor vehicle comprising
- a body (2) defining a passenger compartment (3) to accommodate a user,
- an electrical charging assembly (5) comprising a base portion (11) carried by the body (2) in a fixed position and a charging port (6) configured to receive in coupling an electrical connector (7) of the external electrical charging source (8),
- releasable coupling means (13) configured to attach the charging port (6) to the base portion (11) in a releasable manner,
- release means (24) operable to control the releasable coupling means (13) so as to release the charging port (6) with respect to the base portion (11), and
- a release controller (30) operable by the user to operate the releasable coupling means (24) to release the charging port (6) with respect to the base portion (11), **characterized in that** the release controller (30) is usable by the user from inside the passenger compartment (3) to operate the release means (24).

2. The motor vehicle according to claim 1, wherein the release controller (30) is reachable by the user, at least selectively or directly, from inside the passenger compartment (3).

3. The motor vehicle according to claim 1 or 2, further comprising a seat (3s) coupled to the body (2) and arranged within the passenger compartment (3), wherein the release controller (30) is at least selectively or directly reachable by the user seated on the seat (3s).

4. The motor vehicle according to any one of the preceding claims, wherein the releasable coupling means (13) comprise a pair of magnetic elements (20, 21) respectively carried by the charging port (6) and the base portion (11), the pair of magnetic elements (20, 21) being as a whole power supplyable with electrical power so that the magnetic elements (20, 21) can cooperate magnetically with each other to magnetically secure the charging port (6) and the base portion (11) with each other, in which the release means (24) include a power line (22) configured to electrically supply the pair of magnetic elements (20, 21), the power line (22) being controllable by means of the release controller (30) to interrupt the supply of the pair of magnetic elements (20, 21), thereby determining a magnetic decoupling between the magnetic elements (20, 21) and consequently between the charging port (6) and the base portion.

5. The motor vehicle according to any one of the preceding claims, wherein the releasable coupling means (13) comprise a mechanism (16) carried by one between the charging port (6) and the base portion (11), the mechanism (16) in turn carrying a first locking element (17) and being controllable, at least for a given mutual positioning between the charging port (6) and the base portion (11), between a first and a second configuration, in which respectively the first locking element (17) engages and disengages a second locking element (18) being part of the other between the charging port (6) and the base portion (11), such that the charging port (6) and the base portion (11) are mechanically coupled to each other in the first configuration of the mechanism (16) and mechanically disengaged from each other in the second configuration of the mechanism (16).

6. The motor vehicle according to claim 5, when dependent on claim 4, wherein the first and second locking elements (17, 18) comprise the magnetic elements (20, 21), respectively.

7. The motor vehicle according to claim 5 or 6, wherein the release means (24) comprise an actuator device (25) controllable via the release controller (30) to drive the mechanism (16) in the second configuration.

8. The motor vehicle according to any one of claims 5 to 7, further comprising elastic return means (19) configured to exert an elastic reaction on the mechanism (16) toward the first configuration when the mechanism (16) is moved away from the first configuration.

9. The motor vehicle according to any one of the preceding claims, further comprising an access device or access controller (31) reachable by the user located inside the passenger compartment (3) and operable by the user to enable an access to the release controller (30).
